# EUROPÄISCHE PATENTSCHRIFT

(11) **EP 0 637 272 B1**
(45) Veröffentlichungstag und Bekanntmachung des Hinweises auf die Patenterteilung: **11.10.1995**
(21) Anmeldenummer: 93909535.2
(22) Anmeldetag: 23.04.1993
(51) Int. Cl.: B09B 3/00

(54) **VERFAHREN ZUR AUFBEREITUNG VON RÜCKSTANDSHALTIGEN EMBALLAGEN**
METHOD FOR PROCESSING RESIDUE-CONTAINING PACKAGES
PROCEDE DE TRAITEMENT D'EMBALLAGE CONTENANT DES RESIDUS

(30) Priorität: 23.04.1992 WO PCT/EP92/00893; 04.02.1993 DE 4303168
(43) Veröffentlichungstag der Anmeldung: 08.02.1995
(73) Patentinhaber: RATHOR AG, 9050 Appenzell (CH)
(72) Erfinder: PAULS, Mathias, CH-9050 Appenzell (CH); KELLNER, Torsten, CH-9050 Appenzell (CH)
(74) Vertreter: Thiel, Christian, Dr. Dipl.-Chem.
(86) Internationale Anmeldenummer: EP9300988
(87) Internationale Veröffentlichungsnummer: WO9322077

(56) Entgegenhaltungen:
- EP-A- 0 208 660
- EP-A- 0 359 106
- EP-A- 0 422 501
- WO-A-91/18687
- DE-A- 3 714 312
- DE-A- 3 817 273
- DE-U- 8 805 008
- US-A- 3 734 776
- US-A- 4 809 915
- US-A- 4 844 106
- KUNSTSTOFFE. Bd. 80, Nr. 4, April 1990, MUNCHEN DE Seite 509 'FCKW aus PUR- Isolierschaum rückgewinnen'

## Beschreibung

Die Erfindung betrifft ein Verfahren zur Aufbereitung von gebrauchten oder schadhaften rückstandshaltigen Emballagen unter Gewinnung der Wertstoffe, insbesondere von Druckdosen (Aerosoldosen), für die Ausbringung von Polyurethanschaum mit Treibgasen, durch Extraktion mit einem Lösungsmittel, sowie eine Anlage zur Durchführung des Verfahrens.

Rückstandshaltige Emballagen, wie sie beispielsweise in Form von ganz oder teilweise entleerten Aerosoldosen in großen Mengen anfallen, werden zunehmend zu einem Entsorgungsproblem. Eine Ablagerung auf Deponien verbietet sich aus Gründen des Umweltschutzes, da die darin enthaltenen Rückstände in die Atmosphäre, ins Erdreich oder ins Grundwasser gelangen können und dort zu erheblichen Schäden führen können. Entsprechendes gilt für die Verbrennung, die insbesondere bei chemisch- technischen Produkten häufig nur unvollständig ist und große Mengen Schadstoffe erzeugt, die, wenn überhaupt, nur durch aufwendige Maßnahmen gebunden werden können. Insoweit führt eine Verbrennung zwar zu einer starken Verminderung des Abfallvolumens, nicht dagegen zu einer Lösung der Umweltbeeinträchtigung.

Im folgenden wird auf dieses Problem anhand der Entsorgung von prepolymerhaltigen Aerosoldosen für die Erzeugung von Polyurethanschäumen näher eingegangen.

Polyurethanschäume haben auf vielen Gebieten weit verbreitete Anwendung gefunden. Insbesondere im Bauwesen werden sie vielfach zum Abdichten und Isolieren eingesetzt, ebenso auf anderen technischen Gebieten. In der Regel werden Polyurethanschäume aus Aerosoldosen ausgebracht, die ein Polyurethanprepolymer zusammen mit dem benötigten Treibmittel und gegebenenfalls ebenfalls benötigten Additiven enthalten. Diese Aerosoldosen stehen unter Druck und können und dürfen nach Gebrauch nicht wiederverwandt werden und müssen deshalb beseitigt werden. Andererseits stellen sie Problemabfall dar, der einer normalen Entsorgung nicht zugänglich ist. Zudem enthalten insbesondere Aerosoldosen aus älterer Produktion regelmäßig fluorierte Chlorkohlenwasserstoffe, die als die atmosphärische Ozonschicht schädigend angesehen werden und deshalb nicht in die Atmosphäre gelangen sollen.

Im Rahmen der Bemühungen zur Eindämmung des Haus- und Gewerbeabfalls werden zunehmend Maßnahmen diskutiert und auch verordnet, die die Hersteller zwingen, die Verpackung ihrer Produkte nach Gebrauch zurückzunehmen und selbst für die Wiederverwendung bzw. Beseitigung zu sorgen. Durch solche Maßnahmen ist es erforderlich geworden, nach Wegen für eine wirtschaftliche Behandlung solchen Abfalls zu suchen.

Bei der Behandlung von zurückgenommenen Aerosoldosen für die Polyurethanschaumherstellung ergeben sich eine Reihe von Problemen, die bislang einer wirtschaftlichen Wiederaufbereitung und Rückgewinnung entgegenstanden. Beispielsweise steht ein Teil der zurückgenommenen Dosen wegen noch darin verbliebenem Treibgas unter nicht unerheblichem Druck, der sowohl die Öffnung als auch die Verbrennung zu einem Problem macht. Weiterhin weisen die Dosen einen unterschiedlichen Füllungszustand auf, der von überalterten Dosen mit praktisch vollständiger Prepolymerfüllung, die aufgrund eines blockierten Ventils nicht mehr ausgebracht werden kann, bis hin zu praktisch vollständig entleerten Dosen mit an den Randungen anhaftendem Rest von Prepolymer in unvernetztem bis vernetztem Zustand reicht. Diese unterschiedlichen Zustände standen bislang einer einheitlichen Behandlung unter Rückgewinnung der Reste im Wege.

Bislang wurden Aerosoldosen in Anlagen aufbereitet, die wegen der für das Verfahren angenommenen Explosisonsgefahr unter einem üblichen Inertgas gehalten werden, wobei der Begriff "inert" für nicht brennbar steht. Solche Inertgase sind Stickstoff und Argon. Es hat sich aber bei Versuchen gezeigt, daß die Verwendung von Stickstoff den Gashaushalt außerordentlich stark aufbläht und in die effiziente Abscheidung von Treibgasrückständen nachteilig eingreift. Insbesondere erfordert die Gegenwart großer Mengen Stickstoff sehr leistungsfähige und damit teure Kondensationsanlagen, um hinreichende Abscheidungsgrade zu erreichen. Andererseits ist aber die Inertisierung der Anlage zur Vermeidung von Explosionen erforderlich.

Der Erfindung liegt daher die Aufgabe zugrunde, ein Verfahren bereitzustellen, mit dem Emballagen, beispielsweise Behälter, die Polyurethanprepolymer insbesondere für die Schaumherstellung, aber auch für Klebezwecke enthalten, aufbereitet und die darin enthaltenen Wertstoffe gewonnen werden können, ohne daß gesundheits- und umweltschädliche Inhaltsstoffe unkontrolliert freigesetzt werden und ohne daß der Verfahrensablauf durch in großen Mengen eingespeisten Stickstoff belastet wird. Zugleich soll das Verfahren den Anforderungen an die Arbeitssicherheit hinsichtlich Explosionsschutz genügen.

Erfindungsgemäß wird diese Aufgabe mit einem Verfahren der eingangs genannten Art erreicht, das im wesentlichen in einer Atmosphäre aus Treibgas und/oder Lösungsmitteldämpfen durchgeführt wird. Dies ist ein Verfahren, das die folgenden, parallel durchgeführten Schritte umfaßt:
Einbringen der Emballagen unter gleichzeitiger Öffnung in einen Arbeitsbehälter und Extraktion der Rückstände mit einem Lösungsmittel,
Transferieren der rückstandshaltigen Lösung aus dem Arbeitsbehälter in einen Sumpfbehälter,
Konzentrieren der rückstandshaltigen Lösung im Sumpfbehälter unter Verdampfen des Lösungsmittels, Kondensieren des verdampften Lösungsmittels, Rückführen von Lösungsmittel in den Arbeitsbehälter sowie
Ausbringen der Emballagenrückstände aus dem Arbeitsbehälter und, nach hinreichender Anreicherung, Gewinnen der Rückstände in konzentrierter Form aus dem Sumpfbehälter.

Unter "Schutzgas" oder "Treibgas" werden erfindungsgemäß solche Gase verstanden, die in herkömmlichen Druckdosen (Aerosoldosen), insbesondere solchen zur Erzeugung von Polyurethanschaum, als Treib- und Schäummittel eingesetzt werden. Dies sind insbesondere Propan, Butan, Dimethylether, Fluorkohlenwasserstoffe, wie Fluormethane und Fluorethane (etwa R 134a und R 152a) sowie Fluorchlorkohlenwasserstoffe, soweit diese noch in Gebrauch und noch zugelassen sind, CO₂, N₂O, etc. Stickstoff und Argon sind nur insoweit einbezogen, als sie aus Druckdosen freigesetzt werden und dort Bestandteil von Treibgasmischungen sind. "Treibgase" im engeren Sinn, wie sie erfindungsgemäß eingesetzt werden, sind die aus aufzubereitenden Druckdosen freigesetzten Treibgase, wobei es sich versteht, daß in der Anlaufphase des Verfahrens "Treibgase" aus anderen Quellen verwandt werden müssen, um die Anlage zu inertisieren. Besonders hierzu geeignet sind R 134a und R 152a. Einen mehr oder weniger großen Beitrag zur Inertisierung trägt auch das Extraktionslösungsmittel bei, das entsprechend seinem Dampfdruck in der Atmosphäre enthalten ist. Die Beimischung von CO₂ kann aus Gründen des Explosionsschutzes in Mengen bis zu 50 % wünschenswert sein.

Es sei darauf hingewiesen, daß die arbeitstechnische Sicherheit des Verfahrens darauf beruht, daß in einem abgeschlossenen System oberhalb der Explosionsgrenze der beteiligten brennbaren und explosionsfähigen Stoffe gearbeitet wird. Insoweit beruht es nicht auf der vollständigen Verdrängung des Sauerstoffs durch ein nicht brennbares Gas.

Vorzugsweise werden die aufzubereitenden Emballagen in den Arbeitsbehälter eingeschleust. Dies kann mit einer herkömmlichen Schleuse erfolgen, die gewährleistet, daß der Arbeitsbehälter gegen die Umgebung abgeschlossen bleibt.

Soweit die Emballagen noch nicht geöffnet sind, werden sie zweckmäßigerweise bei der Einschleusung geöffnet. Dies geht vorzugsweise mit einer gleichzeitigen Zerkleinerung einher, beispielsweise in einer für solche Zwecke konstruierten Zerkleinerungsanlage. Nachstehend wird diese Zerkleinerung mit Schredden bezeichnet.

Besonders vorteilhaft erfolgt das Öffnen bzw. Schredden der Emballagen unter Besprühen mit Lösungsmittel. Hierdurch wird zum einen das Aufschäumen verhindert und zum anderen etwa eingetragenes Wasser vom Lösungsmittel aufgenommen und verteilt, bevor es mit den Inhaltsstoffen unkontrollierte Reaktionen eingehen kann, was insbesondere bei feuchtigkeitsempfindlichen Materialien, insbesondere feuchtigkeitsvernetzenden Polyurethanprepolymeren, wichtig ist.

Die geschreddeten Emballagen werden anschließend im Arbeitsraum von einer Fördereinrichtung aufgenommen, vorzugsweise von einer Förderschnecke, die geeignet ist, Feststoffe von Flüssigkeiten und Lösungen zu separieren. Sofern es sich bei den Emballagen um ferromagnetische Materialien handelt, kommt auch eine magnetische Abförderung infrage. Kombinationen beider Förderverfahren können ebenfalls zweckmäßig sein, insbesondere dann, wenn Emballagen aus Weißblech mit Kunststoffteilen versehen sind, wie es vielfach in Aerosoldosen der Fall ist.

Die Extraktion der Rückstände in den geöffneten bzw. zerkleinerten Emballagen erfolgt im Arbeitsbehälter mit einem auf die jeweiligen Rückstände abgestimmten Lösungsmittel. Geeignete Lösungsmittel sind in jedem Fall solche, wie sie bei der Herstellung der ursprünglichen Emballageninhalte verwandt wurden und/oder in den Emballagen selbst noch enthalten sind.

Die Extraktion kann zum einen dadurch erfolgen, daß die geöffneten und/oder zerkleinerten Emballagen in den lösungsmittelgefüllten Arbeitsbehälter fallen und dort für eine gewisse Zeit verbleiben, bevor sie abgefördert werden. Parallel dazu oder alternativ können die Emballagen bereits während der Zerkleinerung und/oder während des Fördervorgangs mit frischem Lösungsmittel besprüht und gewaschen werden. Zweckmäßig ist es, die Emballagen in allen drei Stufen mit dem Lösungsmittel in Berührung zu bringen, also sowohl während der Zerkleinerung und der Abförderung zu besprühen als auch in Kontakt mit dem im Arbeitsbehälter befindlichen Lösungsmittel zu bringen, beispielsweise im Auffangtrichter einer Förderschnecke.

Im Anschluß an die Abförderung werden die festen Rückstände dann, in beliebiger Reihenfolge, getrocknet und ausgeschleust sowie anschließend sortiert und der Wiederverwertung zugeführt.

Als Lösungsmittel besonders geeignet sind übliche Ester, Ketone, aliphatische und aromatische Kohlenwasserstoffe und deren Derivate, insbesondere solche mit einem Siedepunkt bis zu etwa 200°C. Werden Behälter mit Polyurethanprepolymeren aufbereitet, kommen als Lösungsmittel insbesondere Aceton und Toluol infrage.

Bei der Aufbereitung von rückstandshaltigen Sprüh-, Druck- und Aerosoldosen fallen größere Mengen an Treibgasen an, deren Entweichen in die Atmosphäre unerwünscht ist. Soweit diese Treibgase nicht zur Inertisierung benötigt werden, werden sie aufgefangen und mittels geeigneter Maßnahmen kondensiert. Eine solche Kondensation kann zum einen durch eine Kompression unter Verflüssigung erfolgen, zum anderen aber auch durch Auskondensieren bei tiefen Temperaturen. Diese Maßnahmen sind insbesondere bei verflüssigbaren Treibgasen angebracht, etwa niedrigsiedenden Fluorchlorkohlenwasserstoffen oder auch brennbaren Kohlenwasserstoffen, wie Propan oder Butan.

Erfindungsgemäß wird die im Arbeitsbehälter erhaltene rückstandshaltige Lösung in einen Sumpfbehälter transferiert, beispielsweise durch Umpumpen, in dem die Lösung weiter konzentriert wird. Dazu wird die Lösung auf eine erhöhte Temperatur gebracht und das Lösungsmittel vom Sumpf abdestilliert, wozu es zweckmäßig sein kann, zur Verminderung der Siedetemperatur und zur Vermeidung von Versetzungen in den Rückständen bei vermindertem Druck zu arbeiten. Die abdestillierten Lösungsmittel werden kondensiert und, nach gegebenenfalls notwendiger destillativer Reinigung, in das Verfahren zurückgeführt. Die Rückstände im Sumpf des Sumpfbehälters werden nach genügender Konzentration abgezogen und der weiteren Verwertung zugeführt.

Für den Fall, daß das erfindungsgemäße Verfahren auf die Aufbereitung von Aerosoldosen mit Polyurethanprepolymeren angewandt wird, ist es zweckmäßig, zur Erhöhung der Fließfähigkeit des im Sumpfbehälter sich sammelnden Prepolymers ein übliches Verdünnungsmittel zuzusetzen. Ein solches Verdünnungsmittel sollte einen höheren Siedepunkt als das jeweils verwandte Lösungsmittel haben. Besonders geeignet für diese Zwecke ist Triethylphosphat oder frischer Rohstoff, ähnlich den Rohstoffen, die ursprünglich in die Emballagen eingefüllt werden.

Das erfindungsgemäße Verfahren wird unter Schutzgas, durchgeführt. Schutzgase sind die bereits genannten "Treibgase" und CO₂, CO₂-haltige Verbrennungsgase und dergleichen, wobei es vor allem auf die Verdrängung des Sauerstoffs im Bereich des Verfahrens ankommt, um explosionsfähige Mischungen zu vermeiden. Im Falle der Verwendung eines Treibgaszusatzes aus einem Vorrat, wie CO₂, R 134a und R 152a ist es zweckmäßig, dieses im Kreis zu führen, wobei in geeigneten Stufen aus Druckdosen freigesetzte Treibmittel und verdampfte Lösungsmittel, abgetrennt werden.

Ein besonderer Vorteil des erfindungsgemäßen Verfahrens liegt darin, daß es kontinuierlich durchgeführt und mit nur geringen Modifikationen auf eine Vielzahl von marktüblichen Druckdosen/Aerosoldosen angewandt werden kann.

Mit dem erfindungsgemäßen Verfahren ist es beispielsweise möglich, Polyurethanprepolymer enthaltende Rückstände aus Aerosoldosen und anderen Behältern aufzubereiten und in einer verwertbaren Form zurückzugewinnen und gleichzeitig das Rohmaterial der Behälter in relativ reiner Form, die sich für die Wiederverwendung oder Deponierung eignet, zu gewinnen. Das sich bei dem Verfahren im Sumpfbehälter in konzentrierter Form anreichernde Prepolymer kann für eine Vielzahl von Zwecken eingesetzt werden, beispielsweise gelöst in Toluol oder einem anderen Lösungsmittel als Klebstoff, als Bindemittel in Verbundwerkstoffen oder als Haftungsvermittler bei der Herstellung von Formteilen aus Recyclingprodukten, wie etwa Kunststoffplatten aus granulierten Altreifen.

Bei der Durchführung des Verfahrens werden zunächst die in den Behältern bzw. Aerosoldosen enthaltenen Rückstände in den Arbeitsbehälter gegeben und in dem dort vorhandenen Lösungsmittel in Lösung gebracht. Durch das Einspeisen der Rückstände in den Arbeitsbehälter und die Rückführung von verdampftem Lösungsmittel steigt das darin enthaltene Volumen über ein Arbeitsvolumen an, bei dem Lösung aus dem Arbeitsbehälter in den Sumpfbehälter transferiert wird. Insgesamt befindet sich im Arbeitsbehälter ein konstantes Volumen aus Lösungsmittel und gelöstem Rückstand.

Der Sumpfbehälter wird über ein geeignetes Medium so weit erhitzt, daß die darin enthaltene Lösung siedet und kontinuierlich Lösungsmittel abdestilliert. Dieses Lösungsmittel wird mit Hilfe eines Kühlmediums kondensiert und direkt oder indirekt in den Arbeitsbehälter zurückgeführt, so daß dort ständig frisches Lösungsmittel zum Lösen der eingebrachten Rückstände zur Verfügung steht. Auf diese Weise werden die in den Arbeitsbehälter eingebrachten Rückstände permanent mit Lösungsmittel extrahiert. Die Extrakte reichern sich im Sumpfbehälter an, da dort das Lösungsmittel permanent abgetrieben wird und werden von dort nach hinreichender Anreicherung gewonnen. Im Arbeitsbehälter verbliebene unlösliche Rückstände werden von dort von Zeit zu Zeit abgezogen.

Besonders vorteilhaft kann das erfindungsgemäße Verfahren auf die Rückgewinnung von Prepolymer aus Aerosoldosen für die Herstellung von Polyurethanschaum angewandt werden. Die Aerosoldose kann dabei über einen Adapter in den Arbeitsbehälter entleert werden, vorteilhaft ist aber die Öffnung und Extraktion im Arbeitsbehälter selbst. Vorzugsweise wird die Aerosoldose im Arbeitsbehälter in einer dafür geeigneten Vorrichtung zerkleinert, etwa einem Schredder. Die Rückstände der Zerkleinerung können, da Aerosoldosen in der Regel aus Weißblech bestehen, mit Hilfe eines Magneten aus dem Arbeitsbehälter entfernt werden, aber auch mittels Förderschnecke, wie vorstehend erwähnt.

Als Lösungsmittel für die Extraktion kommen insbesondere Ester, Ketone, aliphatische oder aromatische Kohlenwasserstoffe oder deren Derivate mit einem Siedepunkt bis etwa 200° C infrage. Besonders geeignet sind die Alkylester von Monocarbonsäuren und Ketone, jeweils mit bis zu 8 Kohlenstoffatomen, sowie Alkylbenzole mit bis zu 10 Kohlenstoffatomen. Besonders bevorzugt sind Aceton, Butanon, Toluol und Xylole. Soll das extrahierte Prepolymer anschließend für Klebstoffe verwandt werden, empfiehlt sich die Anwendung von Toluol, da Klebstoffe auf Polyurethanbasis häufig in Toluollösung angewandt werden. Zudem haben Lösungen von Polyurethanprepolymeren in Toluol eine vergleichsweise niedrige Viskosität.

In den Sumpfkolben kann ein Verdünnungsmittel gegeben werden, das die Fließfähigkeit des transferierten und daran angereicherten Prepolymers verbessert bzw. gewährleistet. Wird das Verdünnungsmittel bereits zu Beginn der Extraktion zugesetzt, muß es einen höheren Siedepunkt als das Lösungsmittel haben, damit es sich im Laufe der Extraktion nicht abreichert. Üblicherweise verwandte Verdünnungsmittel für Prepolymere sind Trialkylphosphate, insbesondere Triethylphosphat, oder andere dem Ausgangsstoff entsprechende Rohstoffe.

Erfindungsgemäß wird das in den Aerosoldosen noch enthaltene Treibmittel - in der Regel fluorierte Chlorkohlenwasserstoffe, teilhalogenierte Kohlenwasserstoffe, Dimethylether, Propan, Butan, etc. - ebenfalls aufgefangen und, soweit es nicht zur Inertisierung der Anlage dient, gewonnen. Hierzu kann der aus dem Arbeitsbehälter stammende Gasstrom komprimiert werden, so daß die darin enthaltenen Treibgase verflüssigt werden. Alternativ können die Treibmittel durch Abkühlung kondensiert und in einer Kühlfalle aufgefangen werden.

Das erfindungsgemäße Verfahren eignet sich sowohl für die chargenweise als auch für die kontinuierliche Durchführung. Wegen der doch erheblichen Investitionskosten empfiehlt sich für die Durchführung der kontinuierliche Betrieb.

Die Erfindung betrifft ferner eine Anlage zur Durchführung des erfindungsgemäßen Verfahrens. Eine solche Anlage umfaßt eine Eingangsschleuse, eine Vorrichtung zum Öffnen der eingeschleusten Emballagen, einen Auffangbehälter für die geöffneten Emballagen, wenigstens je einer Zuleitung für frisches Lösungsmittel und Schutzgas, einen Abzug für lösliche Emballagenrückstände enthaltendes Lösungsmittel, eine Fördereinrichtung für feste Emballagenrückstände sowie wenigstens eine auf die Vorrichtung zur Öffnung der Emballagen gerichtete Sprüheinrichtung zum Versprühen von Lösungsmittel. Angeschlossen sind ferner periphere Einrichtungen zur Gewinnung der festen und gelösten Emballagenmaterialien, zur Rückgewinnung des Lösungsmittels sowie Abscheider für aus den Emballagen gegebenenfalls freigesetzte Treibgase.

Die in der Anlage verwandte Vorrichtung zum Öffnen der eingeschleusten Emballagen besteht zweckmäßigerweise aus einem herkömmlichen Schredder mit zwei gegenläufig zueinander rotierenden, mit Schneidmesser versehenen Trommeln. Wesentlich ist, daß ein solcher Schredder oder jede andere zum Öffnen der Emballagen geeignete Vorrichtung während des Öffnungsvorgangs mit Lösungsmittel besprüht wird, um die beim Öffnen freigesetzten Rückstände unmittelbar in Lösungsmittel aufzunehmen. Auf diese Weise wird das Aufschäumen des Inhalts, wenn dieser Treibgase enthält, aber auch das Verkleben, vermieden. Zugleich wird durch das Besprühen an den Emballagen anhaftendes oder darin eingedrungenes Wasser verteilt, so daß es nicht zu einer unkontrollierten Reaktion dieses Wassers mit freigesetztem Emballageninhalt kommt. Dies ist besonders wichtig bei der Aufbereitung von Emballagen, die Polyurethanprepolymer enthalten, das in Gegenwart von Feuchtigkeit unkontrolliert vernetzt und zu einem Verkleben der Öffnungsvorrichtung führen kann. In Gegenwart ausreichender Mengen an Lösungsmittel kann die Konzentration an eingetragenem Wasser so weit vermindert werden, daß eine unkontrollierte Reaktion nicht mehr möglich ist. Dennoch ablaufende Vernetzungsreaktionen halten sich dann in tolerierbarem Rahmen.

Zweckmäßigerweise befindet sich wenigstens eine Sprühvorrichtung oberhalb der Öffnungsvorrichtung. Besonders vorteilhaft ist, wenn während des Öffnungsvorgangs die Öffnungsvorrichtung von oben und unten von jeweils wenigstens einer Sprühvorrichtung mit Lösungsmittel beschickt wird. Nach dem Öffnen gelangen die Emballagen zusammen mit dem darauf gesprühten Lösungsmittel in einen Auffang- und Extraktionsbehälter, aus dem die flüssigen bzw. gelösten Bestandteile über eine Leitung abgezogen werden und die festen Emballagenrückstände abgefördert werden.

Zweckmäßigerweise besteht die Fördereinrichtung aus einer Förderschnecke, die in den mit Lösungsmittel gefüllten unteren Teil des Auffangbehälters hineinragt und dort befindliche feste Bestandteile abfördert. Diese Förderschnecke wird vorzugsweise aus einer oder mehreren Sprühdüsen mit frischem Lösungsmittel besprüht, um an den abgeförderten Feststoffen anhaftende Lösung der Emballagenrückstände abzuwaschen. Das gewaschene Fördergut wird dann, zweckmäßigerweise nach Passieren einer Trocknungsanlage, über eine Ausgangsschleuse aus der Anlage ausgeschleust, um der weiteren Sortierung und Verwendung zugeführt zu werden.

Das in der erfindungsgemäßen Anlage verwandte Lösungsmittel wird zweckmäßigerweise im Kreislauf geführt. Hierzu ist es erforderlich, Lösung aus dem Extraktions- und Auffangbehälter kontinuierlich abzuziehen, durch Destillation von den gelösten Inhaltsstoffen zu befreien und nach der Kondensation über ein Leitungssystem in die Anlage zurückzuführen, der sie über die Sprühvorrichtungen und gegebenenfalls die Waschvorrichtung wieder zugeführt werden.

Erfindungsgemäß wird die Anlage mit Schutzgas, wie eingangs definiert, gefahren. Das Schutzgas wird, soweit nicht aus den Emballagen selbst stammt, über eine Leitung zweckmäßigerweise im Bereich der Öffnungsvorrichtung eingeführt und aus dem Extraktions- und Arbeitsbehälter und/oder der Trocknungsanlage wieder abgezogen. Zur Verminderung der Kosten kann das Schutzgas im Kreis geführt werden. Es ist dann zweckmäßig, im Schutzgaskreislauf Vorrichtungen zum Abscheiden von Aerosolen, Feuchtigkeit, mitgeführten Treibgasen und aufgenommenem Lösungsmittelanteil vorzusehen.

Es ist zweckmäßig, die Schleusen über separate Leitungen mit Inertgas zu beschicken, wobei hier, und nur hier, zweckmäßigerweise Stickstoff, Argon oder CO₂ eingsetzt wird, um zu verhindern, daß Gase in die Umgebung gelangen, die dort unerwünscht sind.

Die Erfindung wird durch die beiliegenden Abbildungen bevorzugter Ausführungsformen näher erläutert. Von diesen zeigt
- Fig. 1: eine Recycling-Apparatur im Labormaßstab zur Veranschaulichung,
- Fig. 2: eine erfindungsgemäße technische Anlage und
- Fig. 3: eine Detaildarstellung der Anlage aus Fig. 2.

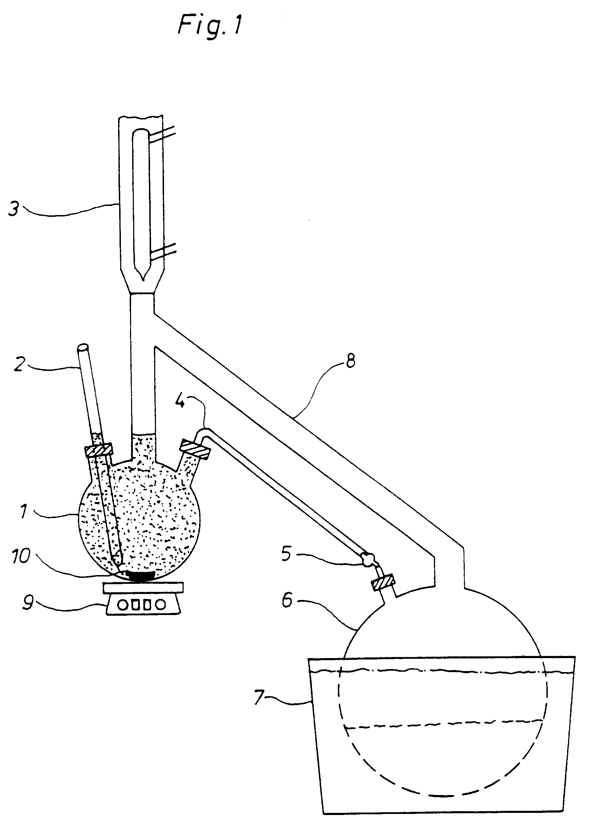

Fig. 1 zeigt eine Recycling-Apparatur für Polyurethanschaumbildner im Labormaßstab. In einem Dreihalskolben 1 mit einer Zuführung 2 und einem Überlauf 4, sowie einem in einem Rückflußkühler 3 endenden, aufsteigenden Rohr befindet sich das Extraktionslösungsmittel, dem über die Zuführung 2 und einen nicht gezeigten Adapter der Inhalt von nicht völlig entleerten Aerosoldosen für die PU-Schaumherstellung zugeführt wird. Ein Hohlmagnet 10, der über einen Magnetrührer 9 bewegt wird, sorgt für eine kontinuierliche Durchmischung.

Über den Überlauf 4 gelangt in dem Maße, in dem über die Zuführung 2 Material in den Dreihalskolben 1 gelangt, die Lösung aus dem Kolben 10 in den Sumpfkolben 6. Ein Absperrhahn 5 stellt sicher, daß die Zufuhr an Lösung unterbrochen werden kann. Der Sumpfkolben 6 wird über ein Heizbad 7 so weit beheizt, daß die darin enthaltene Lösung siedet und verdampftes Lösungsmittel durch ein zum Rückflußkühler 3 verlaufendes Rohr 8 abdestilliert. Das am Rückflußkühler 3 kondensierende extraktfreie Lösungsmittel tropft in den Arbeitskolben 1 zurück, nimmt dort erneut an der Extraktion teil und bewirkt gleichzeitig einen Lösungstransfer in den Sumpfkolben 6.

Die Durchführung des erfindungsgemäßen Verfahrens in der vorstehend beschriebenen Apparatur beginnt mit der Vorbereitung des Arbeitskolbens 1, in den beispielsweise Aceton als Lösungmittel eingebracht wird. Parallel dazu wird in den Sumpfkolben 6 eine geringe Menge Verdünnungsmittel, etwa Triethylphosphat, sowie weiteres Lösungsmittel gegeben, so daß das darin sich ansammelnde Prepolymer fließfähig bleibt.

Anschließend wird der Kreislauf angefahren. Der Sumpfkolben 6 wird auf ca. 90° C aufgeheizt und der Rückflußkühler und der Magnetrührer eingeschaltet. Nach etwa 15 Min. hat sich ein Gleichgewicht mit einem Systemkreislauf eingestellt, d.h. so viel Lösungsmittel, wie aus dem Sumpfkolben 6 über die Destillationsbrücke 8 in den Rückflußkühler 3 verdampft, kondensiert dort und tropft in den Arbeitskolben 1. Von diesem läuft das Lösungsmittel über den Überlauf 4 und den Absperrhahn 5 in den Sumpfkolben 6 zurück. Der Kreislauf ist geschlossen.

Sobald das Gleichgewicht eingestellt ist, wird über das Einleitungsrohr 2 und einen nicht gezeichneten Adapter PU-Schaum in den Arbeitskolben 1 eingeleitet.

Dort löst sich der Schaum sofort auf, das Prepolymer geht in Lösung und das Treibgas entweicht durch den Kühler 3, an dessen oberen Ende es durch eine - nicht gezeigte - Kühlfalle abgeschieden wird. Das eingebrachte Volumen an Prepolymer fließt als verdünnte Lösung über den Überlauf 4 in den Sumpfkolben 6. Dort reichert sich das Prepolymer in dem Maße an, in dem über das Einleitungsrohr 2 PU-Schaum in den Arbeitskolben 1 eingespritzt und in verdünnter Lösung in den Sumpfkolben transferiert wird. Das leichtflüchtige Lösungsmittel befindet sich dagegen im Kreislauf und wird immer wieder aus dem Sumpfkolben in den Arbeitskolben zurückgeführt.

Gegen Ende des Arbeitsgangs bildet sich im Sumpfkolben 6 ein Prepolymer-Lösungsmittelgemisch, das hoch an Prepolymer angereichert ist. Durch Schließen des Absperrhahns 5 kann verhindert werden, das neue Lösung in den Sumpfkolben hineinfließt, so daß durch Weiterführung der Destillation dieses Prepolymer weiter eingedickt werden kann. Das Prepolymer wird aus dem Sumpfkolben abgezogen, wenn es die erwünschte Konzentration bzw. Anreicherung erfahren hat.

Naturgemäß reichert sich im Sumpfkolben nicht nur die Prepolymerkomponente aus den Aerosoldosen an, sondern auch die darin enthaltenen Additive und Katalysatoren. Soweit das Produkt erneut zur Bildung von Polyurethanen verwandt wird, stören diese weiteren Stoffe nicht; für andere Zwecke können diese aber zumindest teilweise durch Destillation unter Normaldruck oder im Vakuum oder durch Extraktionsverfahren mit Lösungsmitteln, die das Prepolymer nicht lösen und mit ihm nicht reagieren, entfernt werden.

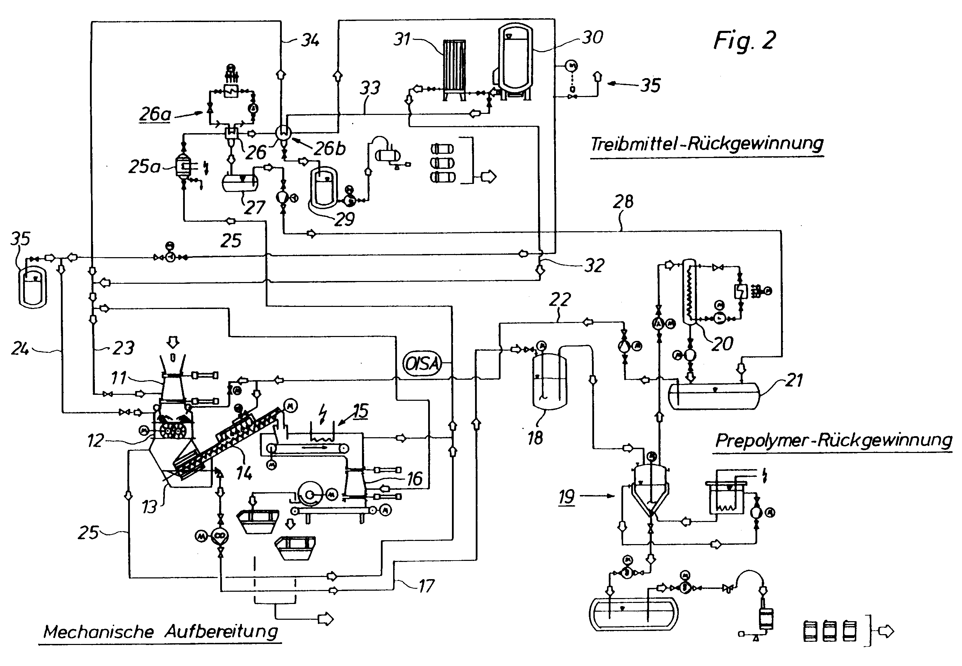

Fig. 2 zeigt schematisch den Verfahrensablauf in einer nach dem erfindungsgemäßen Verfahren betriebenen Anlage für die Prepolymer-Rückgewinnung aus Prepolymer enthaltenden Emballagen, insbesondere Aerosoldosen. Das Verfahren kann aber mit für den Fachmann ohne weiteres ersichtlichen Modifikationen auch auf die Aufbereitung anderer Emballagen angewandt werden.

Die in Fig. 2 gezeigte Anlage besteht aus drei Abschnitten, der mechanischen Aufbereitung, der Prepolymerrückgewinnung und der Treibmittel-Rückgewinnung. In der mechanischen Aufbereitung passieren die angelieferten Emballagen zunächst ein Eingangslager und gelangen zur Aufgabestation, wo die Emballagen von Fremdmaterialien und Kunststoffteilen befreit werden, sowie vorgetrocknet werden. Über eine Zudosierung mit Waage werden sie über eine Eingangsschleuse 11 einer Zerkleinerung 12 zugeführt, in der sie unter Besprühen mit Lösungsmittel geschreddet und in den Arbeitsbehälter 13 transferiert werden. In diesem Arbeitsbehälter werden die geschreddeten Emballagen mit Lösungsmittel gewaschen und von löslichen Bestandteilen getrennt. Die festen Bestandteile werden über eine Förderstrecke 14 unter ständigem Besprühen mit Lösungsmittel abgefördert und dann einer Trocknungsanlage 15 zugeführt und anschließend über eine Schleuse 16 aus dem Verfahren ausgeschleust. Das in der Trocknungsanlage 15 verdampfte Lösungsmittel wird kondensiert und in das Verfahren zurückgeführt. Im Anschluß an die Ausschleusung werden die zerkleinerten Feststoffe nach Material sortiert und der Wiederverwertung zugeführt.

Das im Arbeitsbehälter 13 gesammelte Lösungsmittel mit den darin gelösten Rückständen wird über die Leitung 17 einem Vorlagebehälter 18 zugeführt, aus dem die Lösung dann in die Verdampfung gelangt. Hier wird, ggf. unter vermindertem Druck, das Lösungsmittel abdestilliert. Der Destillationsrückstand wird abgezogen, abgestimmt auf den weiteren Verwendungszweck behandelt und konditioniert und in den Wirtschaftskreislauf zurückgeführt. Nicht mehr einsetzbare Rückstände können ggf. der Verbrennung oder als Konzentrat der Deponierung zugeführt werden.

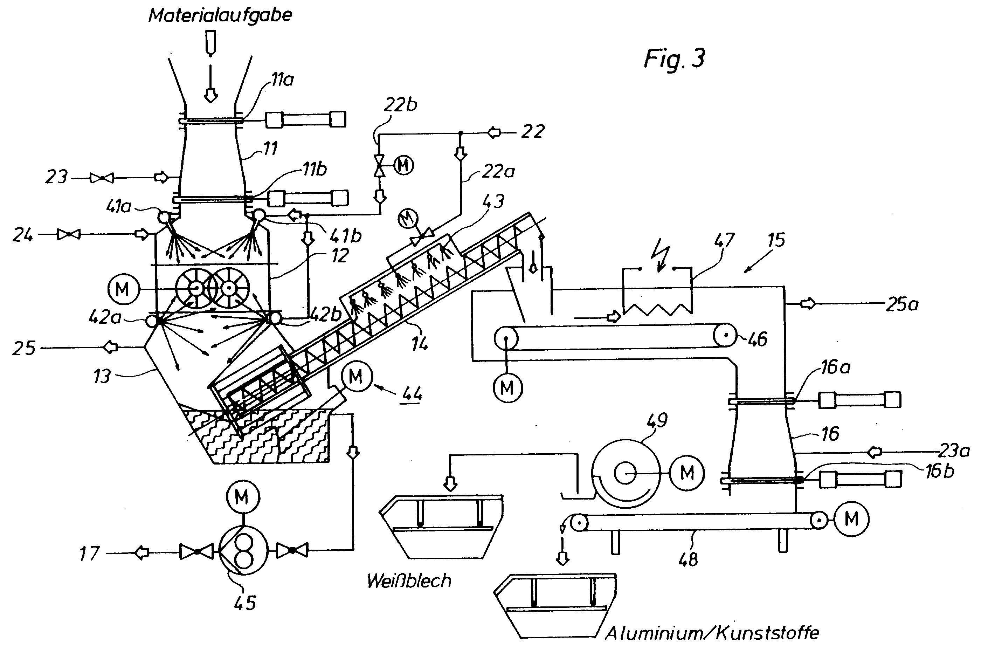

Das aus der Verdampfung 19 abdestillierte Lösungsmittel wird in einer Kondensation 20 kondensiert und über einen Vorratstank 21 und die Leitung 22 in den Kreislauf zurückgeführt. Lösungsmittelverluste werden durch Frischlösungsmittel ausgeglichen. Das kondensierte Lösungsmittel gelangt aus dem Vorratstank 21 über Sprühanlagen (s. Fig. 3) in der Zerkleinerung 12 und der Förderanlage 14 zurück in den Arbeitsbehälter 13.

Die Zerkleinerung im Schredder 12 erfolgt wie die Extraktion und die Destillation unter Schutzgas, das über die Leitung 24 zugeführt wird. Im Normalfall wird während des Betriebs der Anlage der Treibgasanfall zur Deckung des Schutzgasbedarfs ausreichen. Eine Zuspeisung über Leitung 24 ist insbesondere dann erforderlich, wenn weitgehend entleerte Druckdosen behandelt werden oder wenn die Anlage angefahren wird. Der bei der Zerkleinerung anfallende Gasanteil wird mit dem Schutzgasstrom über die Leitung 25 und gegebenenfalls eine Aerosolabscheidung und eine Trocknung 25a einer Kondensation 26 zugeführt. Dort werden in einer ersten Stufe 26a zunächst mitgeführte Lösungsmittel abgeschieden und einem Vorratsbehälter 27 zugeführt, der über die Leitung 28 mit dem Lösungsmitteltank 21 der Kondensation 20 in Verbindung steht, und dann in einer zweiten Stufe 26b die Treibmittel kondensiert und gewonnen und in einem Tank 29 gesammelt, soweit sie nicht als Schutzgas in der Anlage verbleiben. Der Treibmittelkondensation können auch die in der Verdampfung 19 der Lösungsmittel anfallenden Treibgasanteile zugeführt werden. Ein Teil des Treibmittels wird aus der Kondensation in die Aufbereitung zurückgeführt und gegebenenfalls aus dem Vorratstank 35 über die Leitung 24 ergänzt. Die Schleusen 11 und 16 werden jeweils über die Leitungen 32 und 34 mit Stickstoff aus dem Flüssiggastank 30 versorgt, entweder nach Durchgang durch einen Verdampfer 31 oder durch den Wärmetauscher 26b.

Zweckmäßigerweise erfolgt die Kondensation von Treibmittel der Leitung 25 im Kondensator 26b mit Hilfe von aus dem Flüssiggastank 30 über die Leitung 33 herangeführtem frischem und kaltem bis flüssigem Stickstoff, der anschließend über die Leitungen 34 und 23 in die Schleusen 11 und 16 eingespeist wird. Nicht kondensierte und unschädliche Treibgasbestandteile werden im Anschluß an die Kondensation bei 35 an die Luft abgegeben, sofern der Schutzgasbedarf der Anlage gedeckt ist.

Fig. 3 zeigt eine erfindungsgemäße Anlage zur mechanischen Aufbereitung von rückstandshaltigen Emballagen. Diese besteht aus einer Materialaufgabe in eine Schleusenvorrichtung 11, die über einen Schieber 11a mit aufzubereitenden Emballagen gefüllt wird und über einen zweiten Schieber 11b die eingebrachten Emballagen in die eigentliche Anlage abgibt. Die Schleuse 11 wird über die Leitung 23 mit Stickstoff, beschickt. Unterhalb der Schleuse 11 befindet sich die Öffnungs- bzw. Schreddervorrichtung aus zwei motorgetriebenen (M) und gegeneinander rotierenden Trommeln, die die eingebrachten Emballagen mit daran angeordneten Messern oder dergleichen zerkleinern. Oberhalb der Schreddervorrichtung befinden sich zwei Sprühdüsen 41a und 41b, durch die Lösungsmittel auf die Oberseite der rotierenden Trommeln abgegeben wird. Gleichermaßen wird Lösungsmittel über schräg unterhalb der Trommeln der Schredderanlage angeordnete Sprühdüsen auf die geschreddeten Emballagen abgegeben.

Die Sprühdüsen 41a, 41b sowie 42a und 42b werden über Zuführungen 22 und 22b mit frischem Lösungsmittel versorgt, das nach dem Versprühen mit dem zerkleinerten Gut in den unter der Zerkleinerungsvorrichtung 12 befindlichen Extraktions- und Arbeitsbehälter 13 gelangt. Im Behälter 13 befindet sich das Extrakt-Lösemittel-Gemisch zusammen mit den festen Bestandteilen der Emballagen. Ein motorgetriebenes Rührwerk 44 sorgt für den innigen Kontakt von festen Emballagenrückständen und Lösungsmittel und eine wirkungsvolle Extraktion. Der Extrakt wird aus dem Behälter 13 mit einer motorgetriebenen Pumpe 45 über die Leitung 17 abgezogen und dem in Fig. 2 gezeigten Vorratsbehälter 18 der Prepolymerrückgewinnung zugeführt.

Zur Abförderung der festen Emballagenrückstände aus dem Behälter 13 dient ein Schneckenförderer 14, der mit seinem unteren Ende in das Extrakt-Lösungsmittel-Gemisch eintaucht. Um die festen Emballagenrückstände exraktfrei zu bekommen, werden sie mit der Schnecke durch eine Waschstrecke mit darin angeordneten und auf die Schnecke gerichteten Sprühdüsen 43 gefördert. Die Sprühdüsen 43 werden über die Lösungsmittelleitungen 22 und 22a mit frischem Lösungsmittel versorgt. Das auf den Schneckenförderer 14 gesprühte Lösungsmittel gelangt in den Behälter 13.

Die mit dem Schneckenförderer 14 geförderten festen Emballagenrückstände gelangen über einen Aufgabetrichter in eine Trockenvorrichtung 15, in der ein Förderband 46 die festen Rückstände unter einer Heizvorrichtung 47 hindurch befördert. Von dort gelangt das Fördergut in eine Austragsschleuse 16. Die Schleuse 16 ist über einen Schieber 16a zur Anlage hin abgedichtet und über einen Schieber 16b zur Aufbereitung der Feststoffe. Über eine Leitung 23a kann Stickstoff in die Schleuse 16 eingeführt werden.

Die Aufbereitung besteht aus einem motorgetriebenen Förderband 48, mit dem das Fördergut unter einem Magnetabscheider 49 hindurch geführt wird. Mit Hilfe des Magnetabscheiders wird das Fördergut nach seinen magnetischen Eigenschaften sortiert.

Die erfindungsgemäße Anlage gemäß Fig. 3 selbst wird - mit Ausnahme der Schleusen - unter Schutzgas betrieben. Das Schutzgas, wird über Leitung 24 in die Zerkleinerungsvorrichtung 12 eingeführt und verteilt sich in der gesamten Anlage. Aus der Anlage austretendes, mit Lösungsmittel und geringen Mengen Stickstoff aus den Schleusen beladenes Schutzgas wird über die Leitung 25 aus dem Behälter 13 und/oder über die Leitung 25a aus der Trocknungszone 15 der festen Emballagenrückstände abgezogen. Es kann zweckmäßig sein, das Schutzgas im Kreis zu führen, wenn der Anfall aus den Druckdosen gering ist.

Zweckmäßigerweise sind sämtliche Leitungen mit Ventilen ausgestattet, die, soweit eine Regelung des darin geführten Materialstroms erforderlich ist, motorgetrieben sein können. Dies gilt insbesondere für die Lösungsmittelzuleitungen zu den Sprühdüsen und Waschanlagen, deren Betrieb eingestellt werden kann, sobald die Materialaufgabe bzw. die Abförderung von festen Rückständen endet.

In der vorangegangenen Beschreibung werden die Begriffe Treibmittel, Treibgas, Schutzgas und Inertgas deckungsgleich verwandt werden, soweit der Betrieb der eigentlichen Anlage betroffen ist. Soweit die Schleuseneinrichtungen betroffen sind, werden unter Schutz- bzw. Inertgas herkömmliche Schutzgase, wie Stickstoff und Argon, verstanden.

Die im erfindungsgemäßen Verfahren zum Einsatz kommenden Vorrichtungen und Anlagen sind auf dem Markt verfügbar oder können vom Fachmann durch einfache Modifikation oder Anpassung bekannter Vorrichtungen oder Anlagen an den gewünschten Zweck konstruiert werden.

## Patentansprüche

1. Verfahren zur Aufbereitung von rückstandshaltigen Emballagen unter Gewinnung der Wertstoffe insbesondere von Druckbehältern zur Ausbringung von Polyurethanschäumen mit Treibgasen, durch Extraktion mit einem Lösungsmittel, mit den folgenden parallel durchgeführten Schritten, die in einer Atmosphäre im wesentlichen aus Treibgas und/oder Lösungsmitteldämpfen durchgeführt werden:
Einbringen der Emballagen in einen Arbeitsbehälter unter gleichzeitiger Öffnung und Extraktion der Rückstände mit einem Lösungsmittel,
Transferieren der rückstandshaltigen Lösung aus dem Arbeitsbehälter in einen Sumpfbehälter,
Konzentrieren der rückstandshaltigen Lösung im Sumpfbehälter unter Verdampfen des Lösungsmittels, Kondensieren des verdampften Lösungsmittels, Rückführen von Lösungsmittel in den Arbeitsbehälter sowie
Ausbringen der Emballagenrückstände aus dem Arbeitsbehälter und,
nach hinreichender Anreicherung Gewinnen der Rückstände in konzentrierter Form aus dem Sumpfbehälter.

2. Verfahren nach Anspruch 1, dadurch gekennzeichnet, daß die Emballagen zur Öffnung geschreddet werden.

3. Verfahren nach Anspruch 2, dadurch gekennzeichnet, daß die Emballagen unter Besprühen mit Lösungsmittel geschreddet werden.

4. Verfahren nach einem der vorstehenden Ansprüche, dadurch gekennzeichnet, daß feste Schredderrückstände über ein Fördergerät, vorzugsweise einen Schneckenförderer, aus dem Arbeitsbehälter ausgeschleust werden.

5. Verfahren nach einem der Ansprüche 2 bis 4, dadurch gekennzeichnet, daß ferromagnetische Schredderrückstände magnetisch aus dem Arbeitsbehälter gefördert werden.

6. Verfahren nach einem der Ansprüche 2 bis 5, dadurch gekennzeichnet, daß die Schredderrückstände bei der Abförderung mit Lösungsmittel besprüht werden.

7. Verfahren nach einem der vorstehenden Ansprüche, dadurch gekennzeichnet, daß als Lösungsmittel Ester, Ketone, aliphatische und/oder aromatische Kohlenwasserstoffe mit einem Siedepunkt bis etwa 200°C verwandt werden.

8. Verfahren nach Anspruch 7, dadurch gekennzeichnet, daß als Lösungsmittel Aceton oder Toluol verwandt werden.

9. Verfahren nach einem der vorstehenden Ansprüche, dadurch gekennzeichnet, daß das Lösungsmittel aus dem Sumpfbehälter unter vermindertem Druck abdestilliert wird.

10. Verfahren nach einem der vorstehenden Ansprüche, dadurch gekennzeichnet, daß in den Emballagen enthaltene Gase, insbesondere Treibmittel, und gegebenenfalls Lösungsmittel abgetrennt und gewonnen werden.

11. Verfahren nach Anspruch 10, dadurch gekennzeichnet, daß die Gase kondensiert werden.

12. Verfahren nach einem der vorstehenden Ansprüche, dadurch gekennzeichnet, daß es unter freigesetztem Treibgas als Schutzgas durchgeführt wird, vorzugsweise unter Propan, Butan, Dimethylether, fluorierten Kohlenwasserstoffen und/oder CO₂.

13. Aufbereitungsanlage zur Durchführung des Verfahrens nach einem der vorstehenden Ansprüche mit einer Eingangs- (11) und einer Ausgangsschleuse (16), einer Vorrichtung zum Öffnen von eingeschleusten Emballagen (12), wenigstens je einer Zuleitung für frisches Lösungsmittel (22) und Schutzgas (24), einem Abzug (17) für lösliche Emballagenrückstände enthaltendes Lösungsmittel, einer Fördervorrichtung (14) für feste Embalagenrückstände und wenigstens einer auf die Vorrichtung zum Öffnen der Emballagen (12) gerichteten Sprühvorrichtung (41, 42) zum Versprühen von Lösungsmitteln, gekennzeichent durch einen Extraktions- und Auffangbehälter (13) für die geöffneten Emballagen, eine Verdampfung (19) zum Abdestillieren von Lösungsmitteln, eine Kondensation (20) für abdestilliertes Lösungsmittel, eine Rückführung (22) für kondensiertes Lösungsmittel sowei Einrichtungen zur Gewinnung gelöster Emballagenmaterialien.

14. Anlage nach Anspruch 13, dadurch gekennzeichnet, daß die Vorrichtung zum Öffnen der Emballagen (12) ein aus zwei gegenläufig rotierenden Schneidtrommeln bestehender Schredder ist.

15. Anlage nach Anspruch 13 oder 14, dadurch gekennzeichnet, daß oberhalb der Vorrichtung zum Öffnen der Emballagen (12) und darauf gerichtet wenigstens eine Sprühdüse (41a, 41b) angeordnet ist.

16. Anlage nach einem der Ansprüche 13 bis 15, dadurch gekennzeichnet, daß unterhalb der Vorrichtung zum Öffnen der Emballagen (12) und darauf gerichtet wenigstens eine Sprühdüse (42a, 42b) angeordnet ist.

17. Anlage nach einem der Ansprüche 13 bis 16, gekennzeichnet durch eine in den Auffangbehälter (13) hineinreichende Förderschnecke (14) zur Abförderung fester Emballagenrückstände.

18. Anlage nach einem der Ansprüche 13 bis 17, dadurch gekennzeichnet, daß oberhalb der Fördervorrichtung für feste Emballagenrückstände und darauf gerichtet Düsen (43) zum Versprühen von Lösungsmittel angeordnet sind.

19. Anlage nach einem der Ansprüche 13 bis 18, gekennzeichnet durch eine im Anschluß an die Fördervorrichtung (14) angeordnete Trockenstrecke (15).

20. Anlage nach einem der Ansprüche 13 bis 19, gekennzeichnet durch separate Schutzgaszuleitungen (23, 23a) im Bereich der Schleuseneinrichtungen (11, 16).

## Claims

1. A process for the recovery of the valuable materials from residue-containing packages, particularly pressure containers for dispensing polyurethane foam by means of propellent gases, by extraction with a solvent and comprising the following steps carried out in parallel and in an atmosphere substantially of propellent gas and/or solvent vapours:
insertion of the packages into a working container with simultaneous opening and extraction of the residues by means of a solvent,
transferring the residue-containing solution from the working container to a sump container,
concentrating the residue-containing solution in the sump container by evaporating the solvent,
condensing the evaporated solvent,
returning the solvent to the working ccontainer,
discharging the package residues from the working container and
after sufficient concentration, recovery of the residues in concentrated form from the sump container.

2. A process according to claim 1, characterised in that the packages are opened by shredding.

3. A process according to claim 2, characterised in that the packages are shredded by spraying with solvent.

4. A process according to any of the preceding claims, characterised in that solid shredder residues are discharged by a conveyor, preferably a screw conveyor, from the working container.

5. A process according to any of claims 2 to 4, characterised in that ferromagnetic shredder residues are discharged from the working container magnetically.

6. A process according to any of claims 2 to 5, characterised in that the shredder residues are sprayed with solvent during discharge.

7. A process according to any of the preceding claims, characterised in that the solvents used are esters, ketones or aliphatic and/or aromatic hydrocarbons having a boiling point up to about 200°C.

8. A process according to claim 7, characterised in that the solvents used are acetone or toluene.

9. A process according to any of the preceding claims, characterised in that the solvent from the sump container is distilled off at reduced pressure.

10. A process according to any of the preceding claims, characterised in that gases, particularly propellants, and any solvents in the packages are separated and recovered.

11. A process according to claim 10, characterised in that the gases are condensed.

12. A process according to any of the preceding claims, characterised in that it is carried out in a protective gas of liberated propellent gas, preferably in propane, butane, dimethyl ether, fluorinated hydrocarbons and/or CO₂.

13. A processing plant for working the process according to any of the preceding claims, comprising an input lock (11), and output lock (16), a device for opening packages (12) after their introduction, at least one feed line each for fresh solvent (22) and for protective gas (24), an outlet (17) for solvent containing soluble package residues, a conveyor (14) for solid package residues and at least one spray device (41, 42) for spraying solvents and directed towards the device for opening the packages (12), characterised by an extraction and collecting container (13) for the opened packages, an evaporating means (19) for distilling solvents, a condensation means (20) for distilled solvent, a return means (22) for condensed solvent and means for recovering dissolved package materials.

14. A plant according to claim 13, characterised in that the device for opening the packages (12) is a shredder comprising two cutting drums rotating in opposite directions.

15. A plant according to claim 13 or 14, characterised in that at least one spray nozzle (41a, 41b) is disposed above and directed towards the device for opening the packages (12).

16. A plant according to any of claims 13 to 15, characterised in that at least one spray nozzle (42a, 42b) is disposed below and directed towards the device for opening the packages (12).

17. A plant according to any of claims 13 to 16, characterised by a conveyor screw (14) extending into the collecting container (13) so as to remove solid package residues.

18. A plant according to any of claims 13 to 17, characterised in that nozzles (43) for spraying solvent are disposed above and directed towards the device for conveying solid package residues.

19. A plant according to any of claims 13 to 18, characterised by a drying section (15) following the conveyor (14).

20. A plant according to any of claims 13 to 19, characterised by separate protective gas supply lines (23, 23a) in the neighbourhood of the lock means (11, 16).

## Revendications

1. Procédé pour le traitement d'emballages contenant des résidus avec récupération des matières précieuses, en particulier de récipients sous pression pour la production de mousses de polyuréthanne avec des gaz propulseurs, par extraction avec un solvant, présentant les étapes suivantes réalisées en parallèle, qui sont réalisées dans une atmosphère essentiellement constituée de gaz propulseur et/ou de vapeurs de solvant :
introduction des emballages dans un récipient de travail avec ouverture et extraction simultanées des résidus avec un solvant,
transfert de la solution contenant les résidus du récipient de travail dans un récipient de décantation,
concentration de la solution contenant les résidus dans le récipient de décantation avec évaporation du solvant,
condensation du solvant évaporé,
recyclage du solvant dans le récipient de travail
ainsi que
production des résidus des emballages à partir du récipient de travail et
après enrichissement atteint récupération des résidus sous forme concentrée à partir du récipient de décantation.

2. Procédé selon la revendication 1, caractérisé en ce qu'on fait passer les emballages dans un déchiqueteur pour l'ouverture.

3. Procédé selon la revendication 2, caractérisé en ce qu'on fait passer les emballages dans un déchiqueteur avec arrosage avec du solvant.

4. Procédé selon l'une quelconque des revendications précédentes, caractérisé en ce qu'on fait sortir du récipient de travail les résidus solides du déchiqueteur par l'intermédiaire d'un appareil de transport, de préférence un convoyeur à vis.

5. Procédé selon l'une quelconque des revendications 2 à 4, caractérisé en ce qu'on transporte de manière magnétique les résidus ferromagnétiques du déchiqueteur à la sortie du récipient de travail.

6. Procédé selon l'une quelconque des revendications 2 à 5, caractérisé en ce qu'on arrose les résidus du déchiqueteur avec un solvant lors du transport de sortie.

7. Procédé selon l'une quelconque des revendications précédentes, caractérisé en ce qu'on utilise comme solvant des esters, des cétones, des hydrocarbures aliphatiques et/ou aromatiques avec un point d'ébullition allant jusqu'à environ 200 °C.

8. Procédé selon la revendication 7, caractérisé en ce qu'on utilise comme solvant de l'acétone ou du toluène.

9. Procédé selon l'une quelconque des revendications précédentes, caractérisé en ce qu'on élimine par distillation sous pression réduite le solvant du récipient de décantation.

10. Procédé selon l'une quelconque des revendications précédentes, caractérisé en ce qu'on sépare et récupère dans les emballages les gaz contenus, en particulier le gaz propulseur et éventuellement le solvant.

11. Procédé selon la revendication 10, caractérisé en ce qu'on condense les gaz.

12. Procédé selon l'une quelconque des revendications précédentes, caractérisé en ce qu'on procède sous gaz propulseur dégagé en tant que gaz de protection, de préférence sous propane, butane, diméthylether, hydrocarbures fluorés et/ou CO₂.

13. Installation de traitement pour la réalisation du procédé selon l'une quelconque des revendications précédentes présentant un sas d'entrée (11) et de sortie (16), un dispositif pour l'ouverture des emballages introduits (12), au moins à chaque fois une canalisation pour du solvant frais (22) et du gaz de protection (24), une évacuation (17) pour le solvant contenant les résidus d'emballages solubles, un dispositif de transport (14) pour les résidus d'emballages solides et au moins un dispositif d'arrosage (41, 42) disposé sur le dispositif pour l'ouverture des emballages (12) pour arroser avec un solvant, caractérisée par un récipient d'extraction et de recueil (13) pour les emballages ouverts, une évaporation (19) pour l'élimination du solvant par distillation, une condensation (20) pour le solvant éliminé par distillation, un recyclage (22) pour le solvant condensé ainsi que des dispositifs pour la récupération des matériaux d'emballages dissous.

14. Installation selon la revendication 13, caractérisée en ce que le dispositif pour l'ouverture des emballages (12) est un déchiqueteur constitué de deux tambours tranchants tournants en sens opposé.

15. Installation selon la revendication 13 ou 14, caractérisée en ce qu'on dispose au moins une buse d'arrosage (41a, 41b) au-dessus du dispositif pour l'ouverture des emballages (12) et dirigée sur celui-ci.

16. Installation selon l'une quelconque des revendications 13 à 15, caractérisée en ce qu'on dispose au moins une buse d'arrosage (42a, 42 b) en dessous du dispositif pour l'ouverture des emballages (12) et dirigée sur de celui-ci.

17. Installation selon l'une quelconque des revendications 13 à 16, caractérisée par une transporteuse à vis sans fin (14) arrivant dans le récipient de recueil (13) pour extraire les résidus d'emballages solides.

18. Installation selon l'une quelconque des revendications 13 à 17, caractérisée en ce qu'on dispose des buses (43) pour l'arrosage de solvant au-dessus du dispositif de transport pour les résidus d'emballages solides et dirigées sur celui-ci.

19. Installation selon l'une quelconque des revendications 13 à 18, caractérisée par un parcours de séchage (15) disposé à la suite du dispositif de transport (14).

20. Installation selon l'une quelconque des revendications 13 à 19, caractérisée par des canalisations de gaz de protection séparées (23, 23a) dans le domaine des dispositifs des sas (11, 16).
